(19) Europäisches Patentamt
European Patent Office
Office européen des brevets

(11) Publication number: 0 068 296
B1

(12) # EUROPEAN PATENT SPECIFICATION

(45) Date of publication of patent specification: 11.12.85

(21) Application number: 82105255.2

(22) Date of filing: 16.06.82

(51) Int. Cl.[4]: A 01 N 57/12, A 01 N 65/00, A 01 N 57/16 // (A01N57/16, 57:12, 57:12, 57:00, 57:12, 55:02, 57:12, 47:44, 57:12, 47:30, 57:12, 47:10, 57:12, 47:08, 57:12, 47:06, 57:12, 43:90, 57:12, 43:84)

(54) **A new fungicidal composition, processes for its production and its use.**

(30) Priority: 27.06.81 DE 3125422

(43) Date of publication of application:
05.01.83 Bulletin 83/01

(45) Publication of the grant of the patent:
11.12.85 Bulletin 85/50

(84) Designated Contracting States:
AT BE CH DE FR GB IT LI LU NL SE

(56) References cited:
EP-A-0 022 666
US-A-4 007 258

CHEMICAL ABSTRACTS, vol. 84, no. 1, 5th January 1976, page 125, no. 1230w, Columbus Ohio (USA);

CENTRAL PATENT INDEX - BASIC ABSTRACTS JOURNAL C-AGDOC, Week A47, 24th January 1979, no. 84557A/47, Derwent Publications Ltd, London (GB);

The file contains technical information submitted after the application was filed and not included in this specification

(73) Proprietor: A. Nattermann & Cie. GmbH
Nattermannallee 1
D-5000 Köln 30 (DE)

(72) Inventor: Ghyczy, Miklos, Dipl.-Chem., Dr.
Am Serviesberg 12
D-5000 Köln 30 (DE)
Inventor: Osthoff, Heinrich, Dr.
Rondorfer Strasse 51
D-5030 Hürth (DE)
Inventor: Etschenberg, Eugen, Dr.
Hirseweg 10
D-5000 Köln 41 (DE)

(74) Representative: Redies, Bernd, Dr. rer. nat.
COHAUSZ & FLORACK Patentanwaltsbüro
Schumannstrasse 97 Postfach 14 01 47
D-4000 Düsseldorf 1 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 068 296 B1

**Description**

This invention relates to a new fungicidal composition, to processes for its production and to its use.

Fungicides are used primarily for treating crops and also for treating seeds, actual plants and for decontaminating soil. For controlling fungal diseases, it is now essential to use chemical fungus control agents or fungicides. Numerous chemical substances have been used for controlling fungi. However, fungicides currently in use are still attended by some as yet unsolved problems. Thus, most fungicides are not sufficiently stable. They often have to be used in large quantities and, as a result, can become a source of toxic pollution to the environment. The adhesion of the fungicides to the plants or to the seeds or soil is not always satisfactory so that full activity cannot be developed. Accordingly, it would be desirable to have fungicides which adhere firmly to the specimens or area to be protected, disintegrate readily and are effective even in very low concentrations. Another requirement is ease of handling both during production and during application of the fungicides.

It has now surprisingly been found that the quantity of fungicide per hectare of cultivated area required for fungus control can be reduced by up to 40—60% and, in some cases, by up to 80% providing the fungicidally active substance or the mixture of several fungicidally active substances is used in admixture with one or more de-oiled natural phospholipid products soluble in ethanol consisting of

25 to 96% of phosphatidyl choline or 96% of hydrogenated phosphatidyl choline and
25 to 0% of phosphatidyl ethanolamine,
20 to 0% of phosphatidyl inositol

and the differnece to 100% of one or several of N-acyl phosphatidyl ethanolamines, phosphatidyl serine, phosphatidyl glycerol and lysolecithin a ratio by weight of a:b from 1:0.5 to 1:10 in addition to standard vehicles, diluents, solvents, propellants and/or other inert auxiliaries.

In addition the new mixtures show considerably better adhesion to the product to be protected, particularly to leaves in the case of plants or, where they are used for disinfection, to the specimen or area to be disinfected. The improvement in adhesion also provides for uniform distribution of the fungicide over the specimens or area to be protected so that, despite a considerable reduction in the quantity of chemical fungicide used, excellent long-lasting activity is obtained. In addition to an improvement in the economy of the treatment, this also results in less pollution of the environment and in a reduction in the waiting time following a fungicidal treatment. Finally, most of the phospholipids are natural and, in every case, nontoxic products which, by virtue of their nature and their properties, do not themselves cause any pollution of the environment or have any adverse effect upon the waiting time. Some of the phospholipids are of course even used in foods.

To product the new fungicidal composition, the fungicide(s) is/are mixed with the phospholipid or phospholipid mixture in a ratio by weight of from 1:0.5 to 1:10, but preferably in a ratio by weight of from 1:1 to 1:5. In this connection, the weight of the phospholipid(s) is based on substantially pure phospholipid.

Suitable phospholipids are, for example, the commercially available phosphatidyl cholines or phosphatidyl choline mixtures, such as

Phospholipon® 25
(25% of phosphatidyl choline, 25% of phosphatidyl ethanolamine, 20% of phosphatidyl inositol and the remaining 30% being composed of glycolipids, phosphatidic acids, lysophospholipids (such as lysolecithin) sugar and small amount of oil)

Phospholipon® 55
(55% of phosphatidyl choline, 25% of phosphatidyl ethanolamine, 2% of phosphatidyl inositol and the remaining 18% being composed of glycolipids, phosphatidic acids, lysophospholipids (such as lysolecithin) sugar and small amount of oil)

Phospholipon® 80
(80% of phosphatidyl choline, 10% of phosphatidyl ethanolamine, 2,5% of lysophosphatidyl choline (lysolecithin) and the remaining 7,5% being composed of other, naturally occuring phospholipids such as lysophosphatidyl ethanolamine, phosphatidyl inositol)

Phospholipon® 100
(96% of phosphatidyl choline, ≤ of lysophosphatidyl choline (lysolecithin), ≤1% soybean oil)

Phospholipon$^R$ 100H
(96% of hydrogenated phosphatidyl choline, ≤3% of lysophosphatidyl choline (lysolecithin), ≤1% soybean oil),

Phospholipon® 38
(38% of phosphatidyl choline, 16% of N-acetyl phosphatidyl ethanolamine and 4% of phosphatidyl ethanolamine).

It is particularly preferred to use natural phosphatidyl cholines which may be obtained by the processes described in the following Patents: DE—PS No. 1,047,579, DE—PS No. 1,053,299, DE—PS No. 1,617,679, DE—PS No. 1,617,680, German Patent Applications Nos. P 30 47 048.5, P 30 47 012.3 and P 30 47 011.2.

In these processes, for instance soybeans are extracted with a lower aliphatic alcohol, in particular with 94 to 96% ethanol, which is filtered. The clear solution may be evaporated and is redissolved in a lower aliphatic alcohol which may contain 20% water. This solution is subjected to column chromatography on

silicic acid gel at an elevated temperature which is 60 to 90°C if highly concentrated phosphatidyl choline is desired and which is elevated to temperatures below 60°C, if a product is desired which is to contain varying amounts of phosphatidyl ethanolamine. In the latter case the soybean material is at first de-oiled by known processes, for instance in an acetone solution with subsequent extraction in ethanol or by chromatographic purification over aluminium oxide in ethanol (De-PS 1 047 517, 1 053 299, 1 617 679 or 1 617 680).

Suitable N-acyl phosphatidyl ethanolamines are in particular those in which the acyl group emanates from saturated or olefinically unsaturated fatty acids containing from 2 to 20 carbon atoms, particularly from saturated fatty acids containing from 2 to 5 carbon atoms or from saturated or mono-olefinically unsaturated fatty acids containing 14, 16, 18 or 20 carbon atoms.

The fungicide used may be virtually any fungicide such as known fungicides from the following groups;

1. Aromatic nitro compounds corresponding to the following general formula

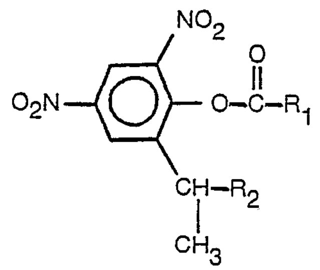

(I)

in which

$R_2$ represents $C_2$—$C_4$-alkenyl or branched alkoxy, particularly $C_1$—$C_4$-alkoxy,

$R_2$ represents $C_2$—$C_6$-alkyl.

The compounds corresponding to formula I are known compounds. Suitable examples are

2,4-dinitro-6-sec-butylphenyl-3′,3′-dimethylacrylate (binapacryl),

2,4-dinitro-6-sec-butylphenyl isopropyl carbonate (dinobuton),

2,4-dinitro-6-(1-methylheptyl)-phenyl crotonate (dinocap).

2. Chlorobenzenes corresponding to the following general formula

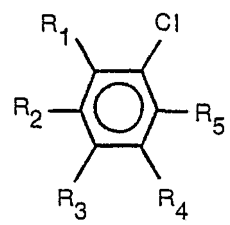

(II)

in which

$R_1$ represents Cl or H,

$R_2$ represents Cl, —$OCH_3$ or H,

$R_3$ represents Cl or —CN,

$R_4$ represents Cl or H and

$R_5$ represents —CN, $OCH_3$, —$NO_2$ or Cl.

The compounds corresponding to formula II are known compounds. Suitable examples are hexachlorobenzene, petachloronitrobenzene (quintozen), 1,3-dicyano-2,4,5,6-tetrachlorobenzene (chlorthalonil), 1,4-dichloro-2,5-dimethoxybenzene (chloroneb), 2,3,5,6-tetrachloronitrobenzene (teenazen).

3. Phthalic acid derivatives corresponding to the following general formula

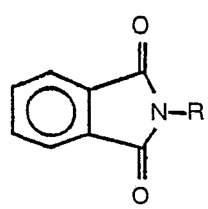

(III)

in which

R represents alkylthio, particularly $C_1$—$C_4$-alkylthio, more particularly methylthio, 1,1,2,2-tetrachloroethylthio, haloalkyl, particularly $C_1$—$C_4$-haloalkyl, more particularly trichloromethyl or thionophosphoryl and the corresponding 3a,4,7,7a-tetrahydroderivatives.

The compounds corresponding to formula III are known compounds. Suitable examples are ditalimphos [N-(diethoxy-thiophosphoryl)-phthalimide], captan [N-(trichloromethylthio)-tetrahydrophthalimide], folpet [N-(trichloromethylthio)-phthalimide], captafol [N-(1,1,2,2-tetrachloroethylthio)-tetrahydrophthalimide].

4. A fungicide from the group of thiocarbamates: ferbam, macozeb, maneb = manganese ethylene-1,2-bis-dithiocarbamate, metiram, methyl metiram, propamocarb, propineb = zinc N,N′-propylene-1,2-bis-dithiocarbamidate, prothiocarb = S-ethyl-N-(3-dimethylaminopropyl)-thiocarbamate hydrochloride, zineb = zinc ethylene-1,2-bis-dithiocarbamidate, zinoc = N-methylene-bis-(zinc ethylene-bis-dithiocarbamidate), ziram = zinc dimethyldithiocarbonate, thiram = bis-(dimethylthiocarbamoyl)-disulfide.

5. A fungicide from the group of benzimidazoles, such as benomyl = 1-(N-butylcarbamoyl)-2-methoxycarbonylamino)benzimidazole, carbendazin = 2-(methoxycarbonylamino)-bezimidazole, fuberidazol = 2-(2-furyl)-benzimidazole, thiabendazol = 2-(4-thiazolyl)-bezimidazole.

6. A fungicide from the group of aniline derivatives, for example, benodanil = 2-iodobenzoic acid anilide, carboxin = 5,6-dihydro-2-methyl-1,4-oxathiine-3-carboxanilide, chloraniformethan = 1-(3,4-dichloroanilino)-1-formylamino-2,2,2-trichloroethane, dicloran = 2,6-dichloro-4-nitroaniline, fenfuram, furalaxyl, methfuroxam, oxycarboxin = 2,3-dihydro-6-methyl-1,4-oxathiine-5-carboxyanilide-S-dioxide.

7. Other fungicides which may be used: thiophanate = 1,2-bis-(3-methoxycarbonyl-2-thioureido)-benzene, dodemorph = N-cyclododecyl-2,6-dimethyl morpholinium acetate, tridemorph = N-tridecyl-2,6-dimethylmorpholine, anilazin = 2,4-dichloro-6-(2-chloroanilino)-S-triazine, bupirimate = 2-ethylamino-4-dimethylamidosulfonate-5-butyl-6-methylpyrimidine, chinomethionate = 6-methylquinoxaline-2,3-dithiocyclocarbonate, dichlorfluanid = N,N-dimethyl-N′-phenyl-N′-fluorodichloromethylthiosulfamide, dimethirimol = 5n-butyl-2-dimethylamino-4-hydroxy-6-methylpyrimidine, dithianon = 2,3-dicyano-1,4-dithia-anthraquinone, dodine = n-dodecyl guanidine acetate, ethirimol = 2-ethylamino-5n-butyl-4-hydroxy-6-methylpyrimidine, fenaminsulf = p-dimethylaminobenzene diazosulfonate sodium salt, fenarimol = α-(2-chlorophenyl)-α-(4-chlorophenyl)-5-pyrimidinemethanol, iprodion = 1-isopropylcarbamoyl-3-(3,5-dichlorophenyl)hydantoin, pyrazophos = 0,0-diethyl-0-(5-methyl-6-ethyloxycarbonyl-pyrazolo-[1,5-a]-pyrimidin-2-yl)-thiophosphate, tolylfluanid = N,N-dimethyl-N′-(4-methylphenyl)-N′-fluorodichloromethylthiosulfamide, triadimefon = 1-(4-chlorophenoxy)-3,3-dimethyl-1-(1,2,4-triazol-1-yl)-2-butanone, 1-(4-chlorophenoxy)-3,3-dimethyl-1-(1,2,4-triazol-1-yl)butanol, triforin = 1,4-di-(2,2,2-trichloro-1-formamidocityl)piperazine, vinclozolin = 3-(3′,5′-dichlorophenyl)-5-methyl-5-vinyl-1,3-oxazolidin-2,4-dione, chlorothalonil and nitrothal.

The individual fungicides are used on their own or in combination with other fungicides after the addition of phospholipides. The new fungicidal compositions may be used for controlling a variety of fungal diseases, including for example leaf blight in potatoes and tomatoes (Alternaria solani); grey mold in onions (Botrytis allii); grey rot and botrytis in strawberries and grapes; Dutch elm disease (Ceratocystis ulmi); leaf spot in beet crops (Cercospora beticola); banana spot disease (Cercospora musae) peach scab (Cladosporium carpophilum); cucumber scab (Cladosporium cucumcrinum); brown spot or downy spot in tomatoes (Cladosporium fulvum); shot disease is stone fruit (Clasterosporium carpophilum); ergot in rye (Clavicep purpurea); spray spot disease in cherries (Coccomyces hiemalis); leaf spot in beans (Colletotrichum lindemuthianum); leaf spot in roses (Diplocarpen rosae); black spot in roses (Marssonia rosae); powdery mildew in cucumbers (Eryiphe cichoracearum); mildew in cereal crops (Eryspihe graminis); leaf blister in tea (Exobasidium vexans); stem rot (Fusarium culmorum); shrivelling disease in tomatoes (Fuserium oxysporum); Panama disease in bananas, snow rot in cereal crops (Fusarium nivale); cherry scab (Fusicladium cerasi); cluster cup rust in pears (Gymnosporangium sabinae); line disease in barley (Helminthosporium gramineum); coffee rust (Hemileia vastatrix); black leaf (Mycena citricolor); blue mold in tobacco (Pernospora tabacina); root rot in beet crops (Phomabetae); rose rust, apple collar rot, blight and rot in potatoes, brown rot in tomatoes (Phytophthora infestans); Brusone disease in rice (Pyricularia oryzae); leaf drop disease, leather berry disease, apple blight (Podosphaera leucotricha); hop mildew (Spaerotheca humuli); rose mildew (Spaerotheca pannosa); wart disease in potatoes (Synchytrium endobioticum); bunt, stinking smut in wheat (Tilletia caries); loose smut in oats (Ustilago avenae), barley (Ustilago nuda); and wheat (Ustilago tritici); apple scab, pear scab, verticullum wilt, wilting diseases in potatoes, cotton and other cultivated plants.

The new fungicidal compositions may be produced in the following manner:

The phospholipid(s) is/are dissolved in organic solvents, such as for example toluene, ethyl acetate, xylene, petrols, ethanol or methanol or mixtures of these solvents. The choice of the solvent will depend on the solubility of the particular fungicide used. The fungicide or the commercially available fungicide preparation is dissolved in the phospholipid solution, optinally by heating. On completion of dissolution, the solvent is removed *in vacuo* while heating. The product thus obtained is converted into a suitable standard commercial form optionally by the addition of suitable auxiliaries, such as for example fillers, vehicles, diluents, wetting agents, stabilisers, gelating agents, evaporation accelerators and extenders.

The new fungicidal compositions may also be prepared by mixing the fungicide or the commercial fungicide product with the phospholipid or the phospholipids and any auxiliaries and fillers required, dissolving or suspending the resulting mixtures in an organic solvent and removing the solvent. The mixture obtained is ready for use.

In the case of fungicides which are soluble in water or in water/alcohol mixtures, the fungicide is with

advantage first dissolved in water or a water/alcohol mixture and the phospholipid or phospholipid mixtures are processed to form a solution or emulsion by stirring or by the application of ultrasonic waves. The emulsifiers normally required may be added before or after this stirring operation. The emulsions or solutions thus obtained are freed from the solvent mixture or water in the usual way, for example by distillation, spray-drying or freeze-drying. The resulting product may be used as such or optionally after the addition of suitable auxiliaries. The product may even be re-emulsified or re-dissolved in water and used as a spray.

Vehicles are, for example, talcum, kaolin, bentonite, kieselguhr, lime or crushed rock. Other auxiliaries are, for example, surface-active compounds, such as soaps (fatty acid salts), fatty alcohol sulfonates or alkyl sulfonates. Gelatin, casein, albumin, starch or methyl cellulose may be used as stabilisers or protective colloids. The new fungicidal compositions may be used in liquid or solid form, for example as dusting powders, granulates, sprays, aerosols, solutions or emulsions, as leaf fungicides, disinfectants or soil fungicides.

### Example 1

Preparation of 1 kg of a spraying powder (20%) containing captan as its active ingredient:

200 g of captan, 200 g of Phospholipon® 55 in 50 ml of ethanol and 10 g of DONSS (dioctyl sodium sulfosuccinate) are dissolved in 3 litres of toluene. 400 ml of the resulting solution are kneaded with 600 g of bentonite and the paste obtained is dried *in vacuo*. This operation is repeated until the bentonite has absorbed the entire toluene solution. The end product is ground.

1 kg of this 20% spraying powder in the form of a 0.15% solution in water is as effective against scap in stone fruit as 0.5 kg of an 80% commercial preparation.

### Example 2

Preparation of 1 kg of an emulsion concentrate (12.5%) containing bupirimate as its active ingredient:

125 g of bupirimate and 150 g of Phospholipon® 55 in 100 ml of ethanol, 50 g of Cellosolve, 2 g of lignin sulfonate and 200 ml of isopropanol are made up to 1 litre with Shellsol and dissolved by stirring.

1 litre of this 12.5% solution is as effective against blight in apples as 1 litre of a 25% solution of standard commercial preparations.

### Example 3

Preparation of 1 kg of a spraying powder containing folpet as its active ingredient:

125 g of folpet, 200 g of Phospholipon® 55 in 50 ml of ethanol and 2 g of DONSS are dissolved in 400 ml of heated toluene, the resulting solution is homogeneously kneaded with 673 g of bentonite (colloidal) and the paste obtained is dried. The product is ground in the presence of 4 g of Aerosil.

1 kg of this spraying powder (12.5%) is as effective as a leaf fungicide as 0.5 kg of a standard commercial product containing 50% of folpet.

### Example 4

Preparation of 1 litre of an emulsion concentrate (6 g/l) containing fenarimol as its active ingredient:

60 g of fenarimol, 150 g of Phospholipon® 100 in 50 ml of ethanol, 200 ml of xylene and 10 g of Marlowet IHF are made up to 1 litre with Shellsol N.

1 litre of this formulation is as effective against apple blight as 1 litre of a commercial preparation containing 12 g/l of fenarimol.

### Example 5

Preparation of 1 kg of a spraying powder (12.5%) containing triadimefon as its active ingredient:

125 g of triadimefon, 200 g of Phospholipon® 80 in 50 ml of ethanol and 10 g of DONSS are dissolved in 250 ml of toluene. The solution is homogeneously applied to 655 g of bentonite (colloidal), after which the product is dried, ground and sifted.

1 kg of this formulation is as effective against powdery mildew in cereals as 1 kg of a commercial product containing 25% of triadimefon.

### Example 6

Preparation of 1 kg of an emulsion concentrate (100 g/l) containing triforine as its active ingredient:

100 g of triforine, 100 g of Phospholipon® 100 in 100 ml of ethanol, 10 g of Cellosolve, 10 g of Tween 80, 2 g of Span 80, 100 ml of tetrahydrofuran and 100 ml of 1,2-propylene glycol are mixed and made up to 1 litre by the addition of Shellsol N.

1 kg of this emulsion concentrate is as effective against powdery midew in cucumbers as 1 kg of a commercial product containing 190 g/l of triforine.

### Example 7

Preparation of 1 kg of a spraying powder (20%) containing thiram as its active ingredient:

200 g of thiram, 200 g of Phospholipon® 100 in 50 ml of ethanol and 10 g of DONSS are dissolved in

hot chloroform. The resulting solution is homogeneously applied to 600 g of bentonite (colloidal) and the mixture obtained is dried and ground.

1 kg of this spraying powder in the form of a 0.2% solution in water is as effective against scab in stone fruit as 0.5 kg of a commercial preparation containing 80% of thiram.

Example 8

Preparation of 300 g of a spraying powder (40%) containing copper oxychloride as its active ingredient:

120 g of copper oxychloride, 120 g of Phospholipon® 38, 1.5 g of Marlowet IHF, 52.5 g of dry glucose and 6 g of Bentone EW are stirred into 1080 g of water and homogenised. The suspension concentrate obtained is spray-dried.

1 kg of this spraying powder (40%) is as effective against coffee rust as 1.8 kg of a standard commercial preparation containing 50% of copper oxychloride.

Example 9

Preparation of 400 g of a spraying powder (40%) containing zineb as its active ingredient:

160 g of zineb, 160 g of Phospholipon® 55, 2 g of Marlowet IHF, 8 g of Bentone EW and 20 g of dry glucose are stirred into 1200 g of water and homogenised. The suspension obtained is spray-dried.

1 kg of the spraying powder (40%) obtained is as effective against downy hop mildew in hop fields as 1.5 kg of a standard commercial preparation containing 65% of zineb.

Example 10

Preparation of 1 kg of an emulsion concentrate (17%) containing propiconazol as its active ingredient:

170 g of propiconazol, 170 g of Phospholipon® 38, 140 g of toluene, 120 g of xylene, 160 g of isophorone, 160 g of N-(2-hydroxyethyl)-caproic acid amide and 80 g of Cremophor are mixed together to form a solution. The resulting emulsion concentrate may either be diluted to form the usual spray mixes containing from 0.1 to 0.01% of active substance or alternatively the same quantity of water may be added. The clear solution thus obtained may by applied by the ULV or LV technique.

1 kg of this emulsion concentrate (17%) is as effective against apple blight as 2.2 kg of a standard commercial product having the same concentration of propiconazol.

Example 11

Preparation of 400 g of a spraying powder (40%) containing benomyl as its active ingredient:

160 g of benomyl, 160 g of Phospholipon® 38, 2 g of Marlowet IHF, 8 g of Bentone EW and 70 g of dry glucose are mixed together in 1000 g of water and homogenised. The suspension obtained is spray-dried to form a spraying powder.

As a leaf fungicide in fruit growing, 1 kg of this powder (0.1%) in water is as effective against mildew as 2 kg of a standard commercial preparation containing 50% of benomyl.

Example 12

Comparison test with triadimefon

To control powdery mildew, fields of winter wheat are sprayed with various mixtures and the percentage destruction of the fungus is measured.

| Test No. | Mixture | | % Destruction of mildew |
|---|---|---|---|
| 1 | phospholipid | 1.6 kg/ha | 0 |
| 2 | phospholipid | 3.2 kg/ha | 0 |
| 3 | triadimefon (25%) | 0.5 kg/ha | 80 |
| 4 | triadimefon (25%) | 0.25 kg/ha | 50 |
| 5 | triadimefon (25%)<br>+ phospholipid | 0.25 kg/ha<br>1.6 kg/ha | 90 |
| 6 | triadimefon (25%) | 0.12 kg/ha | 10 |
| 7 | triadimefon (25%)<br>+ phospholipid | 0.12 kg/ha<br>0.8 kg/ha | 50 |

The commercial product containing the active ingredient referred to by its generic name was used as the active ingredient.

It is acknowledged that designations: Cellosolve, Shellsol, Aerosil, Marlowet IHF, Tween 80, Span 80 and Bentone EW represent registered Trade Marks of third parties.

**Claims**

1. Phosphatide containing fungicidal composition, characterized in that it consists of
a) one or more fungicidal active substances and
b) one or more de-oiled natural phospholipid products soluble in ethanol consisting of
25 to 96% of phosphatidyl choline or 96% of hydrogenated phosphatidyl choline and
25 to 0% of phosphatidyl ethanolamine,
20 to 0% of phosphatidyl inositol
and the difference to 100% of one or several of N-acyl phosphatidyl ethanolamines, phosphatidyl serine, phosphatidyl glycerol and lysolecithin in a ratio by weight of a:b from 1:0.5 to 1:10 in addition to standard vehicles, diluents, solvents, propellants and/or other inert auxiliaries.

2. A fungicidal composition as claimed in Claim 1, characterised in that constituents a) and b) are present in a ratio by weight of from 1:1 to 1:5.

3. A fungicidal composition as claimed in one or more of Claims 1 to 2, characterised in that phosphatidyl choline is used as the phospholipid.

4. A fungicidal composition as claimed in one or more of Claims 1 to 3, characterised in that one or more compounds from the following groups is/are used as the fungicidally active substance:
1. aromatic nitro compounds corresponding to the following general formula

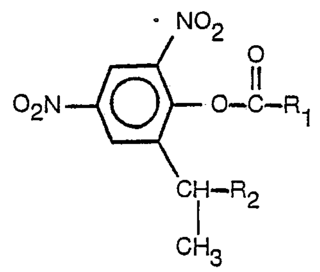

(I)

in which
$R_1$ represents $C_2$—$C_4$-alkenyl or branched alkoxy and
$R_2$ represents $C_2$—$C_6$-alkyl;
2. chlorobenzenes corresponding to the following general formula

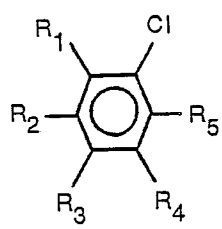

(II)

in which
$R_1$ represents Cl or H,
$R_2$ represents Cl, $—OCH_3$ or H,
$R_3$ represents Cl or —CN,
$R_4$ represents Cl or H and
$R_5$ represents —CN, $—OCH_3$, $—NO_2$ or Cl;
3. phthalic acid derivatives corresponding to the following general formula

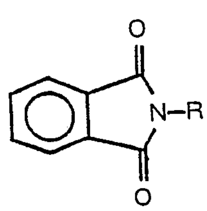

(III)

in which
R represents an alkylthio, haloalkyl or thionophosphoryl group and the corresponding 3a,4,7,7a-tetrahydroderivatives.

4. fungicidally active thiocarbamates;
5. fungicidally active benzimidazoles;
6. fungicidally active aniline derivatives;
7. such fungicides as thiophanate, dodemorph, tridemorph, anilazin, bupirimate, chinomethionat, dichlorfluanid, dimethirimol, dithianon, dodine, ethirimol, fenaminsulf, fenarimol, iprodion, pyrazophos, tolylfluanid, triadimefon, triadimenol (1-(4-chlorophenoxy)-3,3-dimethyl-1-(1,2,4-triazol-1-yl)butanol), trifluorine, vinclozolin.

5. The use of the fungicidal compositions claimed in one or more of Claims 1 to 4 for controlling fungi.

6. A process for producing the fungicidal compositions claimed in one or more of Claims 1 to 4, characterised in that the phospholipid is dissolved in an organic solvent or in a mixture of organic solvents and the fungicide is dissolved in the resulting solution, optionally by heating and/or stirring, after which the solvent or solvent mixture is removed *in vacuo* and the mixture obtained is converted into a standard formulation after the addition of standard fillers and auxiliaries.

7. A process for producing the fungicidal compositions claimed in one or more of Claims 1 to 4, characterised in that the fungicide(s) is/are dissolved or suspended in an organic solvent together with one or more phospholipids and optionally together with standard fillers and auxiliaries, after which the solvent is removed.

8. A process for producing the fungicidal compositions claimed in one or more of Claims 1 to 4, characterised in that one or more water-soluble or alcohol-soluble fungicides is/are dissolved in water or water/alcohol mixtures together with one or more phospholipids by stirring and/or gentle heating and/or by the application of ultrasonic waves, after which the solvent or solvent mixture is removed.

**Patentansprüche**

1. Phosphatidhaltige Fungizid-Zusammensetzung, dadurch gekennzeichnet, daß sie aus
a) einem oder mehreren Fungizid-Wirkstoffen und
b) einem oder mehreren entölten natürlichen, ethanollöslichen Phospholipid-Produkten bestehend aus
25 bis 96% Phosphatidylcholin oder 96% hydriertes Phosphatidylcholin und
25 bis 0% Phosphatidylethanolamin,
20 bis 0% Phosphatidylinosit
und der Differenz bis 100% aus einer oder mehreren Verbindungen aus der Gruppe der N-Acylphosphatidylethanolamine, Phosphatidylserin, Phosphatidylglycerol und Lysolecithin
im Gewichtsverhältnis a:b von 1:0,5 bis 1:10 neben üblichen Träger-, Verdünnungs-, Lösungs-, Versprühungs- und/oder anderen inerten Hilfsmitteln besteht.

2. Fungizid-Zusammensetzung gemäß Anspruch 1, dadurch gekennzeichnet, daß die Bestandteile a) und b) im Gewichtsverhältnis 1:1 bis 1:5 vorliegen.

3. Fungizid-Zusammensetzung gemäß einem oder mehreren der Ansprüche 1 oder 2, dadurch gekennzeichnet, daß als Phospholipid Phosphatidylcholin eingesetzt wird.

4. Fungizid-Zusammensetzung gemäß einem oder mehreren der Ansprüche 1 bis 3, dadurch gekennzeichnet, daß als Fungizid-Wirkstoff eine oder mehrere Verbindung aus den folgenden Gruppen eingesetzt werden:

1. Aromatische Nitroverbindungen entsprechend der folgenden allgemeinen Formel

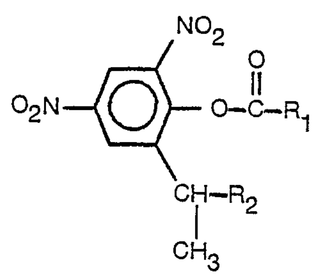

(I)

worin
$R_1$ $C_2$—$C_4$-alkenyl oder verzweigtes Alkoxy und
$R_2$ $C_2$—$C_6$-alkyl ist;

2. Chlorbenzole entsprechend der folgenden allgemeinen Formel

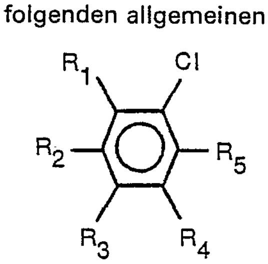

(II)

worin
$R_1$ Cl oder H,
$R_2$ Cl, $-OCH_3$ oder H,
$R_3$ Cl oder —NC,
$R_4$ Cl oder H und
$R_3$ —CN, $-OCH_3$, $-NO_2$ oder Cl ist;
3. Phthalsäurederivate der folgenden allgemeinen Formel

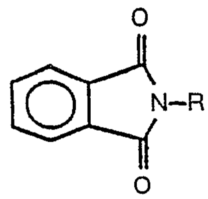

(III)

worin
R eine Alkylthio-, Haloalkyl- oder Thionophosphorylgruppe ist und die entsprechenden 3a,4,7,7a-Tetrahydroderivate;
4. fungizid-wirksame Thiocarbamate;
5. fungizid-wirksame Benzimidazole;
6. fungizid-wirksame Anilin-Derivate;
7. die Fungizid-Wirkstoffe Thiophanat, Dodemorph, Tridemorph, Anilazin, Bupirimat, Chinomethionat, Dichlorfluanid, Dimethirimol, Dithianon, Dodin, Ethirimol, Fenaminsulf, Feinarimol, Iprodion, Pyrazophos, Tolylfluanid, Triadimefon, Triadimenol (1-(4-Chlorphenoxy)-3,3-dimethyl-1-(1,2,4-triazol-1-yl)-butanol), Triflorin, Vinchlozolin.

5. Die Verwendung der Fungizid-Wirkstoffe gemäß einem oder mehreren der Ansprüche 1 bis 4 zur Kontrolle von Pilzen.

6. Verfahren zur Herstellung von Fungizid-Zusammensetzungen gemäß einem oder mehreren der Ansprüche 1 bis 4, dadurch gekennzeichnet, daß das Phospholipid in einem organischen Lösungsmittel bzw. Lösungsmittelgemisch gelöst wird und in diese Lösung ggfs. durch Erwärmen und/oder Rühren das Fungizid gelöst und anschliessend das Lösungsmittel oder Lösungsmittelgemisch im Vakuum abgezogen wird und die erhaltene Mischung unter Zusatz üblicher Füll- und Hilfsmittel in eine übliche Anwendungsform überführt wird.

7. Verfahren zur Herstellung von Fungizid-Zusammensetzungen gemäß einem oder mehreren der Ansprüche 1 bis 4, dadurch gekennzeichnet, daß das oder die Fungizide mit einem oder mehreren Phospholipiden ggfs. unter Zusatz üblicher Füll- und Hilfsmittel in einem organischen Lösungsmittel gelöst bzw. aufgeschlämmt und das Lösungsmittel danach abgezogen wird.

8. Verfahren zur Herstellung von Fungizid-Zusammensetzungen gemäß einem oder mehreren der Ansprüche 1 bis 4, dadurch gekennzeichnet, daß ein oder mehrere, in Wasser oder Alkohol lösliche Fungizide in Wasser oder Wasser-Alkohol-Mischungen zusammen mit einem oder mehreren Phospholipiden unter Rühren und/oder leichter Erwärmung, und/oder Ultraschall gelöst und das Lösungsmittel bzw. Lösungsmittelgemisch abgezogen wird.

**Revedications**

1. Composition fongicide contenant des phosphatides, caractérisée en ce qu'elle est constituée par
a) une ou plusieurs substances actives fongicides et
b) un ou plusieurs produits à base de phospholipides naturels déshuilés solubles dans l'éthanol constitués par 25 à 96% de phosphatidylcholine ou 96% de phosphatidylcholine hydrogénée et 25 à 0% de phosphatidyléthanolamine, 20 à 0% de phosphatidylinositol, et la différence à 100% d'un ou plusieurs composés parmi les N-acyl-phosphatidyléthanolamines, la phosphatidylsérine, le phosphatidylglycérol et la lysolécithine, dans un rapport pondéral a:b de 1:0,5 à 1:10, en plus de véhicules, diluants, solvants, gaz propulseurs et/ou autres auxiliaires inertes courants.

2. Composition fongicide selon la revendication 1, caractérisée en ce que les constituants a) et b) sont présents dans un rapport pondéral de 1:1 à 1:5.

3. Composition fongicide selon l'une ou plusieurs des revendications 1 à 2, caractérisée en ce que l'on emploie le phosphatidylcholine comme phospholipide.

4. Composition fongicide selon l'une ou plusieurs des revendications 1 à 3, caractérisée en ce que l'on utilise comme substance à activité fongicide un ou plusieurs composés des groupes suivants:

1. composés nitrés aromatiques répondant à la formule générale suivante

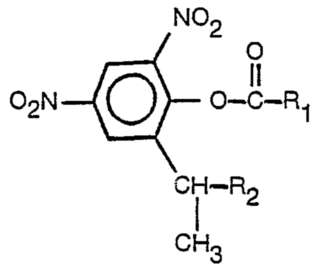

(I)

dans laquelle $R_1$ représente un groupe alcényle en $C_2$—$C_4$ ou alcoxy ramifié et $R_2$ représente un groupe alkyle en $C_2$—$C_6$;

2. chlorobenzènes répondant à la formule générale suivante

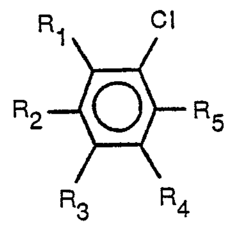

(II)

dans laquelle $R_1$ représente Cl ou H, $R_2$ représente Cl, $—OCH_3$ ou H, $R_3$ représente Cl ou —CN, $R_4$ représente Cl ou H et $R_5$ représente —CN, $—OCH_3$, $—NO_2$ ou Cl;

3. dérivés de l'acide phtalique répondant à la formule générale suivante

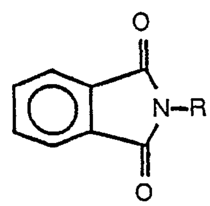

(III)

dans laquelle R représente un groupe alkylthio, halogénoalkyle ou thionophosphoryle et les dérivés 3a,4,7,7a-tétrahydro correspondants;

4. thiocarbamates à activité fongicide;

5. benzimidazoles à activité fongicide;

6. dérivés de l'aniline à activité fongicide;

7. fongicides tels quel thiophanate, dodémorphe, tridémorphe, anilazine, bupirimate, chinométhionate, dichlorfluanide, diméthirimol, dithianon, dodine, éthirimol, fenaminsulf, fenarimol, iprodion, pyrazophos, tolyfluanide, triadiméfon, triadiménol (1-(4-chlorophénoxy)-3,3-diméthyl-1-(1,2,4-triazol-1-yl)butanol), triflorine, vinclozoline.

5. Utilisation des compositions fongicides selon l'une ou plusieurs des revendications 1 à 4 pour combattre les moisissures.

6. Procédé de production des compositions fongicides selon l'une ou plusieurs des revendications 1 à 4, caractérisé en ce que l'on dissout le phospholipide dans un solvant organique ou dans un mélange de solvants organiques et que l'on dissout le fongicide dans la solution résultante, éventuellement en chauffant et/ou sous agitation, après quoi on élimine le solvant ou le mélange de solvants sous vide et on transforme le mélange obtenu en formulation courante après l'addition de charges et auxiliaires courants.

7. Procédé de production des compositions fongicides selon l'une ou plusieurs des revendications 1 à 4, caractérisé en ce que l'on dissout ou l'on met en suspension le (les) fongicide(s) dans un solvant organique avec un ou plusieurs phospholipides et éventuellement avec des charges et des auxiliaires courants, après quoi on élimine le solvant.

8. Procédé de production des compositions fongicides selon l'une ou plusieurs des revendications 1 à 4, caractérisé en ce que l'on dissout un ou plusieurs fongicides hydrosolubles ou solubles dans les alcools dans de l'eau ou dans des mélanges eau/alcool avec un ou plusieurs phospholipides sous agitation et/ou chauffage ménagé et/ou en appliquant des ondes ultrasonores, après quoi on élimine le solvant ou le mélange de solvants.